# EUROPEAN PATENT APPLICATION

(11) **EP 4 685 951 A1**
(43) Date of publication of application: **28.01.2026**
(21) Application number: 25182321.7
(22) Date of filing: 12.06.2025
(51) Int. Cl.: H01M 50/209, H01M 50/325, H01M 50/342, H01M 50/358, H01M 50/367

(54) **POWER STORAGE DEVICE**

(30) Priority: 26.07.2024 JP 2024120818
(71) Applicant: TOYOTA JIDOSHA KABUSHIKI KAISHA, Toyota-shi, Aichi-ken 471-8571 (JP)
(72) Inventor: MASUMOTO, Miki, Toyota-shi, 471-8571 (JP); SHINOHARA, Masanori, Toyota-shi, 471-8571 (JP); HIROE, Yoshihiko, Toyota-shi, 471-8571 (JP)
(74) Representative: TBK

(57) **Abstract**

A power storage device (100) includes a power storage cell (10) provided with a pressure relief valve (SV), a housing (20) in which the power storage cell (10) is disposed, and a seat member (30) provided in the housing (20). The seat member (30) includes a sagging portion (31) disposed while being sagged.

## Description

### CROSS REFERENCE TO RELATED APPLICATIONS

This nonprovisional application is based on Japanese Patent Application No. 2024-120818 filed on July 26, 2024 with the Japan Patent Office, the entire contents of which are hereby incorporated by reference.

### BACKGROUND

### Field

The present disclosure relates to a power storage device.

### Description of the Background Art

Japanese Patent Laying-Open No. 2023-046977 discloses a battery pack structure including a power storage module including a plurality of secondary battery cells each having a smoke exhaust port. A heat insulating material is disposed above the smoke exhaust port of the power storage module.

### SUMMARY

In the battery pack structure (power storage device) described in Japanese Patent Laying-Open No. 2023-046977, if high-temperature gas, an internal component, or the like is discharged forcefully from the smoke exhaust port of the secondary battery cell (power storage cell) toward the heat insulating material, the heat insulating material or the components around the heat insulating material may be affected.

The present disclosure has been made to solve the above-described problem. An object of the present disclosure is to provide a power storage device that can reduce the momentum of an emission discharged from a power storage cell.

A power storage device according to one aspect of the present disclosure includes a power storage cell provided with a pressure relief valve, a disposition member in which the power storage cell is disposed, and a heat-resistant member provided in the disposition member. The heat-resistant member includes a sagging portion disposed while being sagged.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 schematically shows a vehicle including a power storage device according to Embodiment 1.
Fig. 2 is a perspective view of the power storage device and a vehicle body according to Embodiment 1.
Fig. 3 is a sectional view taken along the line III-III in Fig. 2.
Fig. 4 is a perspective view showing a configuration of a power storage cell.
Fig. 5 is a perspective view showing a configuration of a lower case.
Fig. 6 is a partially enlarged sectional view showing a configuration of a seat member according to Embodiment 1.
Fig. 7 is a plan view showing a smoke exhaust hole and the seat member according to Embodiment 1.
Fig. 8 is a partially enlarged sectional view showing a state in which a sagging portion of the seat member according to Embodiment 1 is stretched.
Fig. 9 is a partially enlarged sectional view showing a state in which the sagging portion of the seat member according to Embodiment 1 is ruptured.
Fig. 10 is a partially enlarged sectional view showing a state in which the sagging portion of the seat member according to Embodiment 1 protrudes opposite the side of Fig. 8.
Fig. 11 shows a length of the sagging portion of the seat member according to Embodiment 1.
Fig. 12 is a partially enlarged perspective view showing a configuration of an exhaust valve and its vicinity of the power storage device according to Embodiment 1.
Fig. 13 is a partially enlarged sectional view (first view) showing a configuration of a seat member according to Modification 1 of Embodiment 1.
Fig. 14 is a partially enlarged sectional view (second view) showing a configuration of the seat member according to Modification 1 of Embodiment 1.
Fig. 15 is a partially enlarged sectional view (first view) showing a configuration of a seat member according to Modification 2 of Embodiment 1.
Fig. 16 is a partially enlarged sectional view (second view) showing a configuration of the seat member according to Modification 2 of Embodiment 1.
Fig. 17 schematically shows a mobility robot including a power storage device according to Embodiment 2.
Fig. 18 is a perspective view showing a configuration of the power storage device according to Embodiment 2.
Fig. 19 is a sectional view showing the configuration of the power storage device according to Embodiment 2.
Fig. 20 is a sectional view of the power storage device which is taken along the line XX-XX in Fig. 19.
Fig. 21 is a sectional view of the power storage device which is taken along the line XXI-XXI in Fig. 19.
Fig. 22 shows a state in which a sagging portion of Fig. 19 is stretched.
Fig. 23 is a sectional view of the power storage device which is taken along the line XXIII-XXIII in Fig. 22.
Fig. 24 is a sectional view of the power storage device which is taken along the line XXIV-XXIV in Fig. 22.
Fig. 25 shows a modification of a configuration of the sagging portion.

### DESCRIPTION OF THE PREFERRED EMBODIMENTS

Embodiments of the present disclosure will be described with reference to the drawings. In the drawings referred to below, the same or corresponding components have the same reference characters allotted.

### [Embodiment 1]

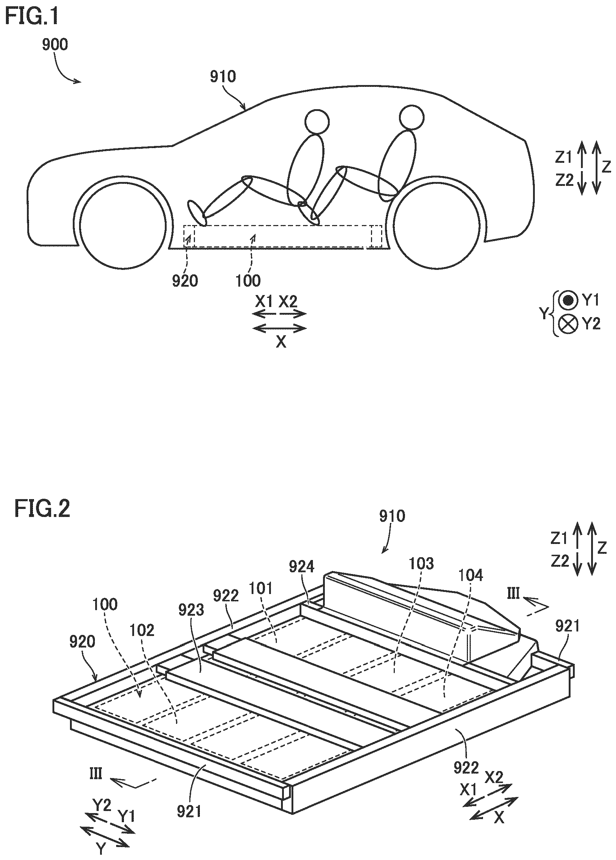

A power storage device 100 in Embodiment 1 of the present disclosure will be described with reference to Figs. 1 to 12. Fig. 1 is a schematic side view of a vehicle 900 including power storage device 100 according to Embodiment 1. In this specification, an X direction, a Y direction, and a Z direction are orthogonal to one another. For example, the X direction and the Y direction are the front-rear direction and the vehicle width direction of vehicle 900, respectively, when power storage device 100 is mounted in vehicle 900. An X1 direction and an X2 direction are the vehicle front side and the vehicle rear side, respectively. A Y1 direction and a Y2 direction are the vehicle left side and the vehicle right side, respectively. The Z direction is the upward-downward (vertical) direction. The Y direction and the Z direction are examples of the "crossing direction" and the "upward-downward direction", respectively, in the present disclosure.

As shown in Fig. 1, vehicle 900 includes a vehicle body 910 in addition to power storage device 100. Examples of vehicle 900 include a hybrid electric vehicle, a plug-in hybrid electric vehicle, and a battery electric vehicle. Vehicle body 910 includes a frame member 920. Frame member 920 is disposed at the bottom of vehicle body 910.

As shown in Fig. 2, frame member 920 includes a pair of first frames 921, a pair of second frames 922, a first cross frame 923, and a second cross frame 924.

The pair of first frames 921 face each other in the X direction. Each first frame 921 is shaped to extend along the Y direction.

The pair of second frames 922 face each other in the Y direction. Each second frame 922 is shaped to extend along the X direction. The ends of each second frame 922 in the X direction are connected to first frames 921. The pair of second frames 922, together with the pair of first frames 921, form a frame of approximately square prism shape that surrounds power storage device 100.

First cross frame 923 is disposed between the pair of first frames 921 and connects the pair of second frames 922 to each other.

Second cross frame 924 is disposed between the pair of first frames 921 and connects the pair of second frames 922 to each other. Second cross frame 924 is spaced apart from first cross frame 923 in the X direction. Each of first cross frame 923 and second cross frame 924 forms, for example, a seat cross.

Power storage device 100 is attached to frame member 920. Power storage device 100 is disposed below first cross frame 923 and second cross frame 924. Power storage device 100 includes four power storage stacks 101 to 104. The number of power storage stacks is not limited to four.

In Embodiment 1, each of power storage stacks 101 to 104 is shaped into a rectangular parallelepiped elongated in the X direction. As shown in Fig. 2, the four power storage stacks 101 to 104 are disposed side by side along the Y direction.

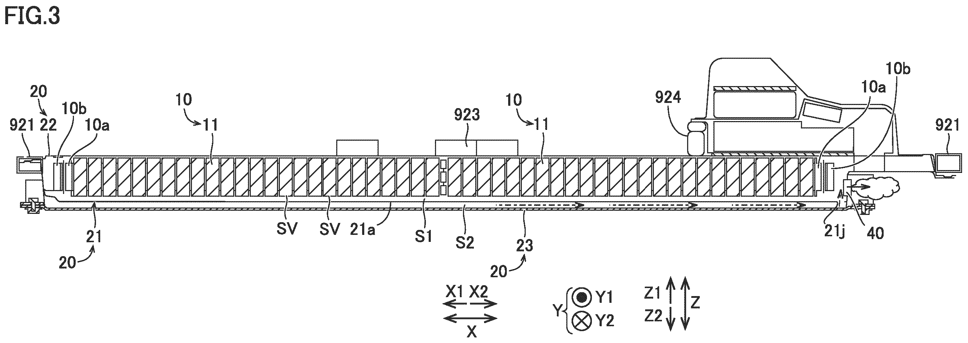

Fig. 3 is a sectional view taken along the line III-III in Fig. 2. As shown in Fig. 3, power storage device 100 includes at least one power storage cell 10 and a housing 20. At least one power storage cell 10 is included in each of power storage stacks 101 to 104 (Fig. 2). In Embodiment 1, in each of power storage stacks 101 to 104, a plurality of (e.g., 50) power storage cells 10 are arranged in the X direction. In Fig. 3, the direction of gas discharged from a pressure relief valve SV (which will be described later) is indicated by the alternate long and short dash line arrows. Housing 20 is an example of the "accommodation case" and the "disposition member" in the present disclosure.

On the opposite sides of a plurality of power storage cells 10 in the X direction, a pair of end plates 10a are provided that sandwich the plurality of power storage cells 10 in between from the opposite sides in the X direction. A monitoring unit (smart battery management) 10b is disposed outside each end plate 10a in the X direction.

Each power storage cell 10 includes an electrode body 11. Electrode body 11 may be formed of a wound body of a positive electrode sheet and a negative electrode sheet wound with a separator in between, or may be formed of a stack of a positive electrode sheet and a negative electrode sheet stacked with a separator in between. Electrode body 11 is shaped to be elongated in the Y direction.

Housing 20 includes a lower case 21, an upper cover 22, and a share panel 23.

Lower case 21 includes a bottom plate 21a. Bottom plate 21a is disposed below the plurality of power storage cells 10. Bottom plate 21a covers the plurality of power storage cells 10 from below. Bottom plate 21a constitutes the bottom surface of lower case 21. Bottom plate 21a is an example of the "lower cover" in the present disclosure.

Upper cover 22, together with lower case 21, accommodates the plurality of power storage cells 10. In Embodiment 1, upper cover 22, together with lower case 21, accommodates four power storage stacks 101 to 104 (Fig 2) in a hermetically sealed manner. Each of power storage stacks 101 to 104 is disposed in a cell space S1 defined by upper cover 22 and lower case 21. Cell space S1 is the space on the power storage cell 10 side relative to bottom plate 21a. Cell space S1 is an example of the "first space" in the present disclosure.

Upper cover 22 covers each of power storage stacks 101 to 104 from above. Lower case 21 covers each of power storage stacks 101 to 104 from below. The peripheral edge of upper cover 22 is connected to the peripheral edge of lower case 21, with a sealing member in between, with a bolt or the like.

Shear panel 23 is provided below lower case 21. Shear panel 23 covers lower case 21 from below. Shear panel 23 has a function of protecting lower case 21. Shear panel 23 may be formed as a flat plate.

Shear panel 23 is located below the plurality of power storage cells 10 and bottom plate 21a of lower case 21. In addition, a smoke exhaust space S2 is defined between bottom plate 21a and shear panel 23. Smoke exhaust space S2 constitutes a smoke exhaust path through which gas (smoke) discharged from power storage cell 10 (hereinafter simply referred to as "gas") flows. Smoke exhaust space S2 is an example of the "second space" in the present disclosure.

Lower case 21 has an exhaust valve 40. Exhaust valve 40 is disposed on the rear end side (X2 side) of lower case 21. The gas flowing through smoke exhaust space S2 is discharged to the outside from exhaust valve 40.

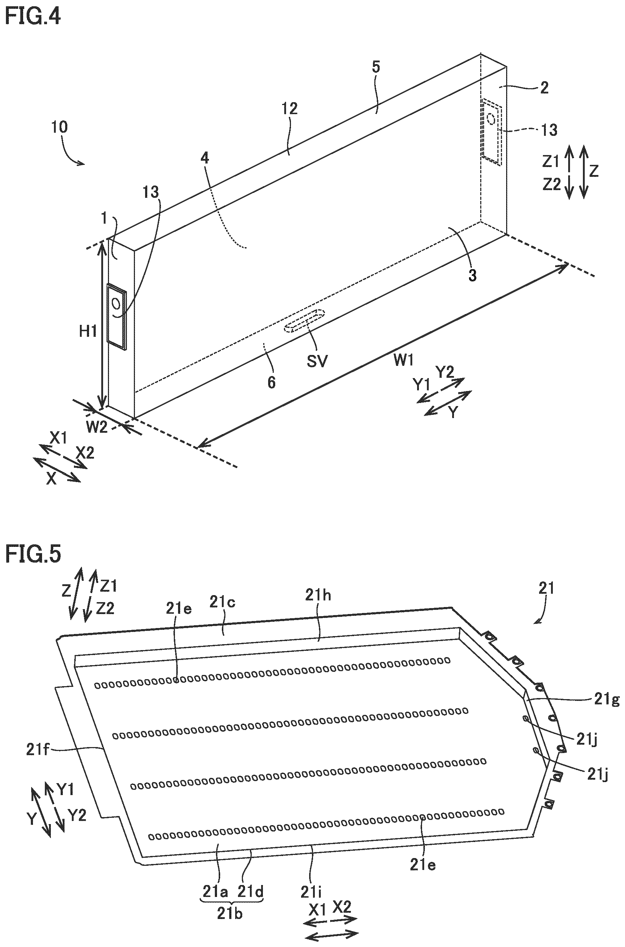

Fig. 4 is a perspective view showing a configuration of power storage cell 10. As shown in Fig. 4, each power storage cell 10 has electrode body 11 (Fig. 3), a cell case 12, a pair of external terminals 13, and pressure relief valve SV. Cell case 12 accommodates electrode body 11.

Cell case 12 is shaped into a rectangular parallelepiped. Cell case 12 is made of a metal such as aluminum. Power storage cell 10 is formed to be elongated in the Y direction. Specifically, a width W1 of power storage cell 10 in the Y direction is greater than a width W2 of power storage cell 10 in the X direction. A height H1 of power storage cell 10 is smaller than width W1 and greater than width W2.

Power storage cell 10 (cell case 12) has a short side surface 1, a short side surface 2, a long side surface 3, a long side surface 4, an upper surface 5, and a lower surface 6.

Short side surface 1 and short side surface 2 are arranged in the Y direction. Specifically, short side surface 1 and short side surface 2 are one end face and the other end face, respectively, of power storage cell 10 in the Y direction.

Long side surface 3 and long side surface 4 are arranged in the X direction. Specifically, long side surface 3 and long side surface 4 are one end face and the other end face, respectively, of power storage cell 10 in the X direction.

Upper surface 5 and lower surface 6 are arranged in the Z direction. Specifically, upper surface 5 and lower surface 6 are a Z1-side end face and a Z2-side end face, respectively, of power storage cell 10.

The pair of external terminals 13 are provided on short side surface 1 and short side surface 2, respectively. Pressure relief valve SV is provided in lower surface 6. Pressure relief valve SV opens when the pressure of the smoke or gas inside cell case 12 exceeds a certain level. In other words, lower surface 6, in which pressure relief valve SV is provided, constitutes the pressure relief surface of cell case 12.

Fig. 5 is a perspective view showing a configuration of lower case 21. Lower case 21 includes an accommodation portion 21b and a plate portion 21c. Accommodation portion 21b includes bottom plate 21a and a peripheral wall 21d. Bottom plate 21a is formed in a plate shape, and bottom plate 21a has a plurality of smoke exhaust holes 21e. The plurality of smoke exhaust holes 21e are arranged in the front-rear direction (X direction) of vehicle 900. In addition, the plurality of smoke exhaust holes 21e arranged in the X direction are arranged in a plurality of (four in Fig. 5) rows in the Y direction. The row of the plurality of smoke exhaust holes 21e arranged in the X direction is formed below each of power storage stacks 101 to 104 (Fig. 2). Smoke exhaust hole 21e is provided below each power storage cell 10. Smoke exhaust hole 21e is a through hole penetrating bottom plate 21a. Smoke exhaust hole 21e is an example of the "hole portion" and "through hole" in the present disclosure.

Alternatively, instead of the plurality of exhaust holes 21e arranged in the X direction, an opening formed to be elongated in the X direction may be formed. In the above-described opening, with lower case 21 fixed to upper cover 22, pressure relief valve SV of each of the plurality of power storage cells 10 is in communication with the above-described opening. Such an opening can facilitate alignment of the above-described opening with pressure relief valve SV.

Bottom plate 21a has two hole portions 21j that are in communication with exhaust valve 40 (Fig. 3). For the sake of brevity, exhaust valve 40 is not shown in Fig. 5.

Peripheral wall 21d is formed so as to extend upward from the outer peripheral edge of bottom plate 21a. Peripheral wall 21d is formed in a circular shape. Peripheral wall 21d includes a front wall 21f disposed in the front (X1 side), a rear wall 21g disposed in the rear (X2 side), a left side wall 21h disposed on the left (Y1 side), and a right side wall 21i disposed on the right (Y2 side). Accommodation portion 21b has an opening that opens upward. Plate portion 21c is formed so as to protrude horizontally from the opening edge of accommodation portion 21b. Rear wall 21d is tapered to the X2 side. The configuration of lower case 21 is not limited to the example shown in Fig. 5.

A plurality of power storage cells 10 are disposed in accommodation portion 21b. Pressure relief valve SV (Fig. 4) of power storage cell 10 and smoke exhaust hole 21e are arranged in the Z direction, and pressure relief valve SV and smoke exhaust hole 21e are in communication with each other.

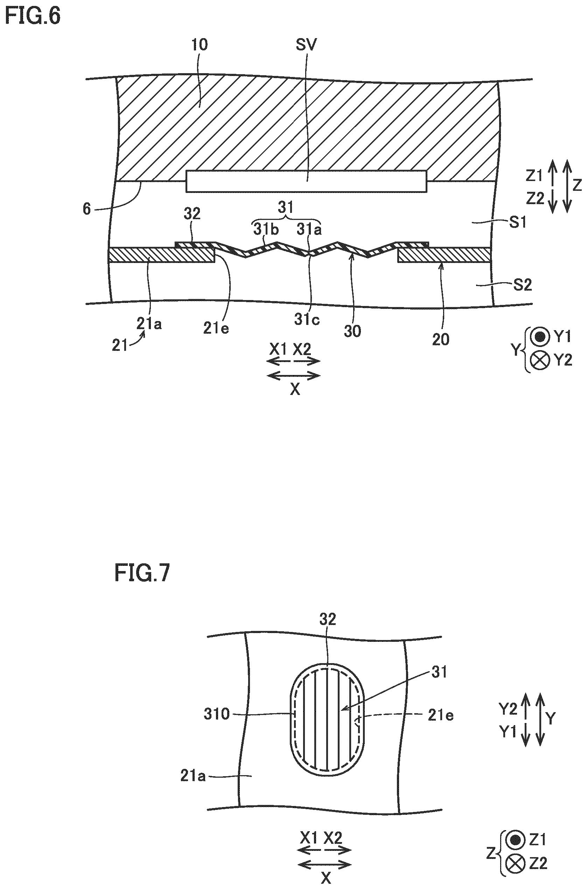

Fig. 6 is a partially enlarged view of pressure relief valve SV and its vicinity in Fig. 3. As shown in Fig. 6, power storage device 100 includes at least one seat member 30. Seat member 30 is disposed in housing 20. Specifically, seat member 30 is disposed on bottom plate 21a of lower case 21. Seat member 30 covers smoke exhaust hole 21e from the Z1 side. As a result, smoke exhaust hole 21e is blocked by seat member 30. Each of the plurality of smoke exhaust holes 21e formed in bottom plate 21a is blocked by a separate seat member 30. In other words, the number of seat members 30 is equal to the number of smoke exhaust holes 21e. The plurality of smoke exhaust holes 21e may be blocked by a common (single) seat member. Seat member 30 is an example of the "heat-resistant member" in the present disclosure.

Seat member 30 is formed of a cloth-like member having heat resistance (flame resistance), such as silica cloth. Silica cloth is a woven sheet of inorganic fibers mainly containing silica (silicon oxide). Silica cloth, which is highly flame-resistant, is a sheet with excellent heat resistance that maintains a certain degree of strength even when it is used in a high-temperature environment of, for example, 1,000°C. Seat member 30 may also have heat insulation properties.

In conventional power storage devices, if an emission such as high-temperature gas or an internal component is discharged forcefully from the pressure relief valve of the power storage cell, the surrounding components may be affected.

In the present embodiment, thus, seat member 30 includes a sagging portion 31 disposed while being sagged. Sagging portion 31 is a portion that is folded in a bellows shape (pleats shape) in the sagged state. Specifically, sagging portion 31 is formed to have peaks and troughs disposed alternately side by side in the X direction.

Sagging portion 31 is folded in the bellows shape while being sagged, leading to compact sagging portion 31 in the sagged state. This can suppress contact of sagging portion 31 in the sagged state with its surrounding component.
Sagging portion 31 is positioned so as to face pressure relief valve SV. In other words, sagging portion 31 is disposed so as to overlap pressure relief valve SV in the Z direction.

This allows an emission such as high-temperature gas from pressure relief valve SV to be discharged toward sagging portion 31. As a result, the momentum (flow velocity) of the emission can be effectively reduced by sagging portion 31.

Sagging portion 31 covers smoke exhaust hole 21e from above. Sagging portion 31 may cover the entire smoke exhaust hole 21e.

Thus, when sagging portion 31 deforms to protrude downward due to a force being applied downward to sagging portion 31, smoke exhaust hole 21e can be used as the space for the above-described deformation. As a result, the momentum of the emission from power storage cell 10 can be easily reduced due to the deformation of sagging portion 31. In addition, smoke exhaust hole 21e, which is a through hole, can suppress contact between bottom plate 21a and sagging portion 31 when sagging portion 31 deforms to protrude downward. This can further reduce the momentum of the emission from power storage cell 10.

As shown in Fig. 7, seat member 30 has an oblong shape, similarly to smoke exhaust hole 21e. Seat member 30 includes an outer peripheral edge 32. Outer peripheral edge 32 is fixed to the upper surface of bottom plate 21a by means of adhesion, bolt fastening, or the like. Sagging portion 31 is surrounded by outer peripheral edge 32. In other words, an outer peripheral edge 310 of sagging portion 31 is connected to outer peripheral edge 32 of seat member 30. Alternatively, outer peripheral edge 32 may be fixed to the lower surface of bottom plate 21a.

Referring again to Fig. 6, sagging portion 31 has a fragile portion 31a and a non-fragile portion 31b. Fragile portion 31a is ruptured more easily than non-fragile portion 31b. Non-fragile portion 31b is all of sagging portion 31 except for fragile portion 31a. Fragile portion 31a and non-fragile portion 31b are examples of the "second part" and the "first part", respectively, in the present disclosure.

Thus, sagging portion 31 can be ruptured easily starting from fragile portion 31a. As a result, the emission from power storage cell 10 can be easily discharged into smoke exhaust space S2.

A notch 31c is formed in fragile portion 31a. Notch 31c is formed in the surface of sagging portion 31 on the Z2 side (opposite power storage cell 10). Notch 31c is formed at the center of sagging portion 31 in the X direction. Notch 31c may extend in the Y direction.

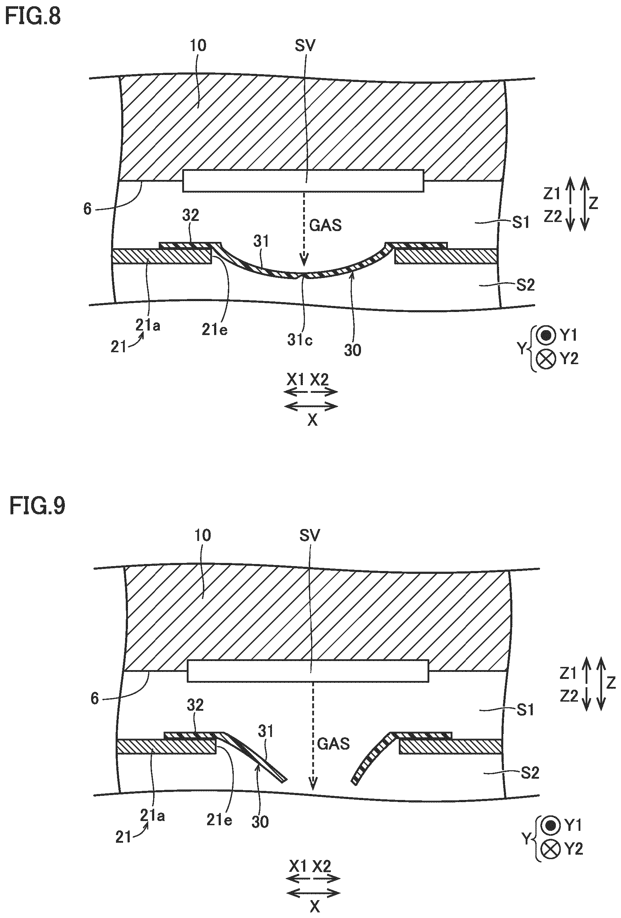

Fig. 8 shows a state in which a pressure is applied downward to sagging portion 31 due to high-temperature gas or the like being discharged from pressure relief valve SV. In this case, sagging portion 31 changes to a state in which it is stretched to project downward. Specifically, sagging portion 31 protrudes downward. In Fig. 8, part of sagging portion 31 on the lower side projects downward beyond smoke exhaust hole 21e.

Fig. 9 shows a state in which sagging portion 31 is ruptured starting from fragile portion 31a (Fig. 7). This allows the emission from pressure relief valve SV to move from cell space S1 to smoke exhaust space S2 through smoke exhaust hole 21e.

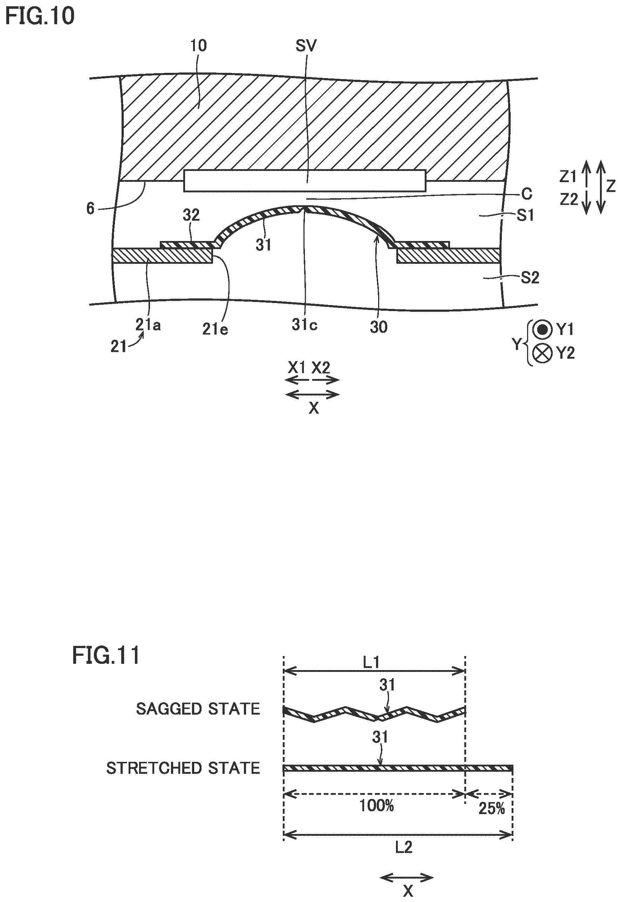

Fig. 10 shows a state when the pressure in cell space S1 is lower than the pressure in smoke exhaust space S2. In this case, sagging portion 31 protrudes upward (toward power storage cell 10).

In this state, sagging portion 31 is spaced apart from power storage cell 10 without being in contact therewith. In other words, a clearance C is formed between the upper end of sagging portion 31 that is protruding upward and the lower end of power storage cell 10 (pressure relief valve SV).

Thus, contact between sagging portion 31 and power storage cell 10 can be suppressed, thereby suppressing one of sagging portion 31 and power storage cell 10 thermally affecting the other.

Fig. 11 shows the length of sagging portion 31 in each state. Sagging portion 31 has a length L1 while being sagged (without any external force). Sagging portion 31 also has a length L2 with the sagging eliminated (while being stretched/elongated in the X direction to have no peaks and troughs).

In Embodiment 1, length L2 is 125% of length L1. The relationship between length L1 and length L2 is not limited thereto. Length L2 is only required to be 105% or more and 150% or less of length L1.

Thus, sagging portion 31 can be deformed easily due to the momentum of the emission from power storage cell 10.

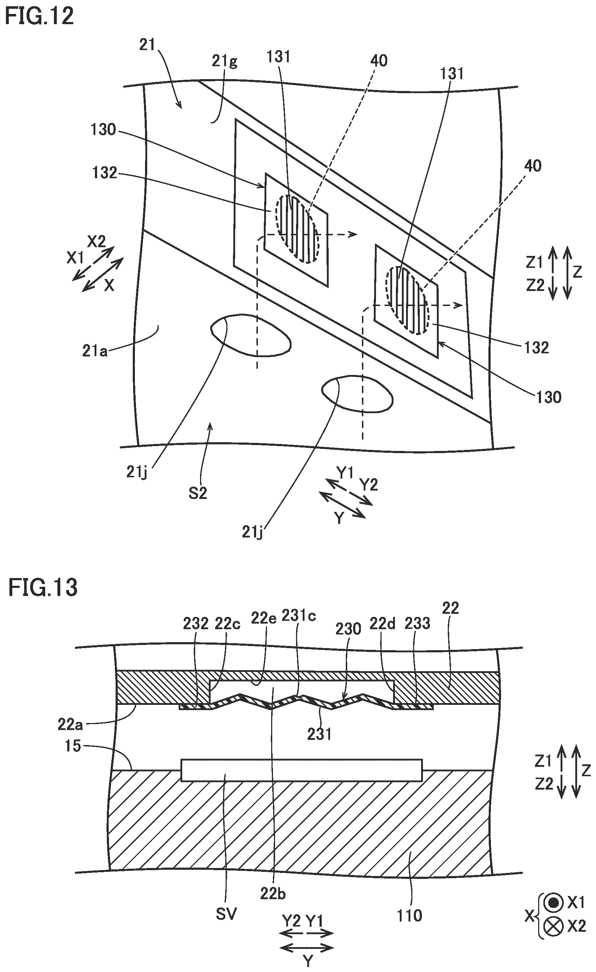

Fig. 12 is a partially enlarged perspective view of exhaust valve 40 and its vicinity. As shown in Fig. 12, two exhaust valves 40 are disposed side by side in the Y direction. In Fig. 12, the flow of gas discharged from power storage cell 10 is represented by the dashed arrow.

The gas from power storage cell 10 flows through smoke exhaust space S2 and then flows into hole portion 21j formed in lower case 21 (e.g., bottom plate 21a). The gas that has flowed into hole portion 21j is discharged to the outside from exhaust valve 40.

Power storage device 100 further includes at least one seat member 130. In Embodiment 1, two seat members 130 are provided. Fig. 12 shows an example in which seat member 130 has a rectangular shape, but the present disclosure is not limited thereto. Seat member 130 may have the same shape (the circular shape in Fig. 12) as that of exhaust valve 40. Seat member 130 is an example of the "heat-resistant member" in the present disclosure.

Seat member 130 includes a sagging portion 131. Sagging portion 131 is formed in the bellows shape, similarly to sagging portion 31 (Fig. 6). Although not shown, sagging portion 131 may also have a fragile portion, similarly to sagging portion 31. In addition, the direction in which the peaks and troughs of sagging portion 131 are disposed side by side (the Y direction in Fig. 12) is not limited to the example shown in Fig. 12.

Seat member 130 has an outer peripheral edge 132. Outer peripheral edge 132 surrounds sagging portion 131. Outer peripheral edge 132 may be attached to, for example, rear wall 21g of lower case 21.

Sagging portion 131 is positioned so as to face exhaust valve 40. Specifically, sagging portion 131 covers exhaust valve 40 from the X2 side.

Thus, the momentum of the emission (gas) discharged from exhaust valve 40 can be reduced by sagging portion 131.

As described above, in Embodiment 1, seat member 30 (130) includes sagging portion 31 (131) disposed while being sagged. Since sagging portion 31 (131) is included in seat member 30 (130) provided in housing 20, sagging portion 31 (131) changes from the sagged state to the stretched state due to the momentum of an emission from power storage cell 10. Thus, the momentum of the emission can be reduced by sagging portion 31 (131). This can suppress the surrounding component of seat member 30 (130) being affected by the momentum (pressure) of the emission. In addition, because seat member 30 (130) has heat resistance (flame resistance), if power storage cell 10 discharges high-temperature gas or the like, the strength of seat member 30 (130) can be maintained for a certain period of time or more. Consequently, after the momentum of the emission from power storage cell 10 has been reduced by sagging portion 31 (131), seat member 30 (130) can be ruptured starting from fragile portion 31a or the like.

### [Modification of Embodiment 1]

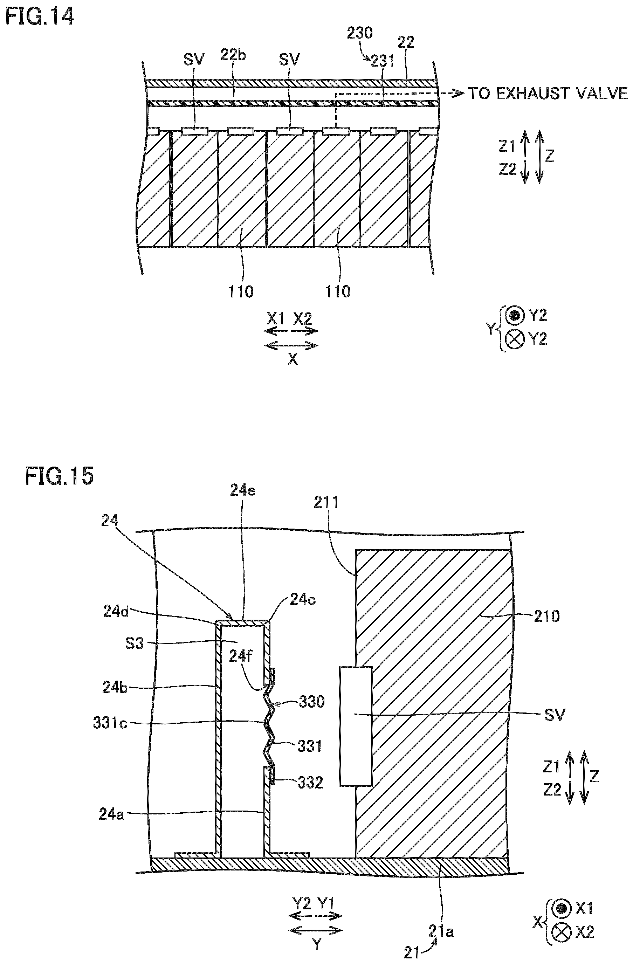

Figs. 13 and 14 show Modification 1 of Embodiment 1 described above. In this example, pressure relief valve SV is provided in an upper surface 15 of a power storage cell 110.

As shown in Fig. 13, upper cover 22 has a lower surface 22a. Lower surface 22a is a surface facing power storage cell 110. Lower surface 22a has a recess 22b that is recessed upward. Recess 22b is formed by a side surface 22c and a side surface 22d arranged in the Y direction and a ceiling surface 22e connecting the respective upper ends of side surface 22c and side surface 22d to each other. Each of side surface 22c and side surface 22d extends upward from lower surface 22a. Side surface 22c faces side surface 22d.

Seat member 230 includes a sagging portion 231, a first end 232, and a second end 233. First end 232 is the Y2-side end of seat member 230. Second end 233 is the Y1-side end of seat member 230. Each of first end 232 and second end 233 is fixed to lower surface 22a of upper cover 22 by means of adhesion, bolt fastening, or the like. Seat member 230 is an example of the "heat-resistant member" in the present disclosure.

Sagging portion 231 connects first end 232 to second end 233. Sagging portion 231 is positioned so as to face pressure relief valve SV. The direction in which the peaks and troughs of sagging portion 231 are disposed side by side (the Y direction in Fig. 13) is not limited to the example shown in Fig. 13.

Sagging portion 231 covers recess 22b from below. In other words, sagging portion 231 is positioned so as to overlap recess 22b in the upward-downward direction.

As a result, when sagging portion 231 deforms so as to protrude upward due to the momentum of the emission from power storage cell 110, sagging portion 231 can be deformed so as to protrude inside recess 22b. Consequently, the prevention of deformation of sagging portion 231 can be suppressed. As a result, the momentum of the emission from power storage cell 110 can be easily reduced.

A notch 231c may be formed, for example, at the center of sagging portion 231 in the Y direction.

As shown in Fig. 14, recess 22b is disposed above the plurality of power storage cells 110 disposed side by side in the X direction. Specifically, recess 22b extends in the X direction along the row of power storage cells 110. A sagging portion 221 extends in the X direction along recess 22b.

The gas discharged from power storage cell 110 (the dashed arrow in Fig. 14) ruptures sagging portion 231 to enter recess 22b, and then flows in the X direction along recess 22b. As a result, the gas is led to exhaust valve 40 (Fig. 12). Sagging portion 231 may not extend in the X direction. For example, a plurality of sagging portions 231 may be disposed side by side in the X direction.

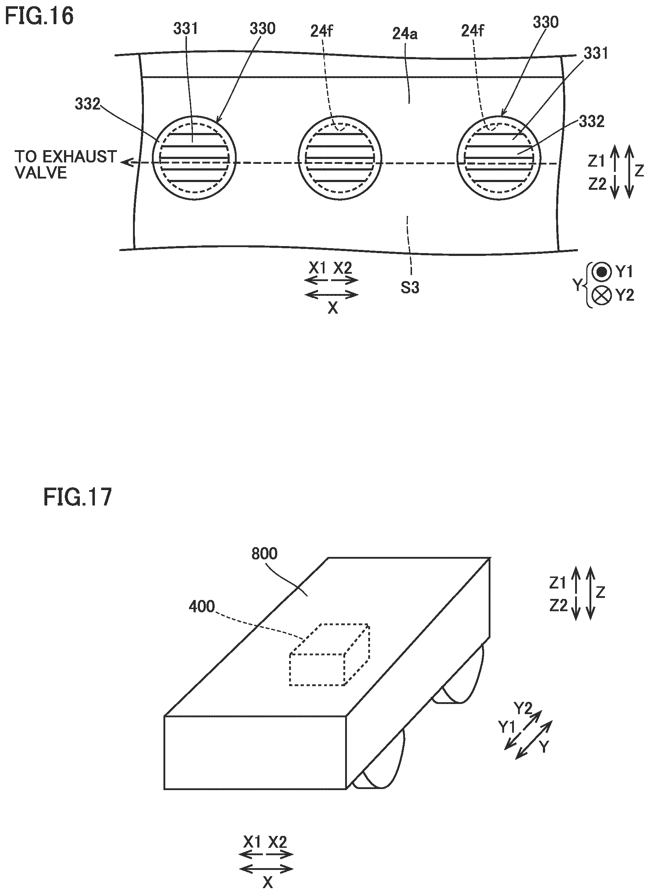

Figs. 15 and 16 show Modification 2 of Embodiment 1 described above. In this example, pressure relief valve SV is provided in a short side surface of a power storage cell 210. In the example shown in Fig. 15, pressure relief valve SV is provided in a short side surface 211 of power storage cell 210. For the sake of brevity, the external terminals are not shown in Fig. 15.

As shown in Fig. 15, housing 20 includes a cross member 24. Cross member 24 is disposed on the upper surface of bottom plate 21a of lower case 21. Cross member 24 is disposed side by side with power storage cell 210 in the Y direction. Specifically, cross member 24 is disposed between the power storage stacks (101, 102, 103, 104) that are adjacent to each other in the Y direction. Cross member 24 extends in the X direction along the row of power storage cells 210 in each power storage stack. Cross member 24 may be provided as, for example, a reinforcing member (skeletal member) for reinforcing frame member 920 (Fig. 1). Cross member 24 is an example of the "parallel member" in the present disclosure.

Cross member 24 has a side surface 24a and a side surface 24b that are opposite in the Y direction. **In** other words, side surface 24a and side surface 24b are arranged in the Y direction. Each of side surface 24a and side surface 24b extends orthogonally to the Y direction. Side surface 24a is disposed on the power storage cell 210 side relative to side surface 24b. Side surface 24a and side surface 24b are examples of the "first side surface" and "second side surface", respectively, in the present disclosure.

Cross member 24 has a connecting surface 24e connecting an upper end 24c of side surface 24a to an upper end 24d of side surface 24b. Connecting surface 24e extends orthogonally to the Z direction. Connecting surface 24e may connect the portions (corresponding to the "upper portions" in the present disclosure) below upper end 24c and upper end 24d to each other. In addition, each of upper end 24c and upper end 24d is an example of the "upper portion" in the present disclosure.

Cross member 24 has a hollow shape in which an internal space S3 surrounded by side surface 24a, side surface 24b, connecting surface 24e, and bottom plate 21a of lower case 21 is formed. Internal space S3 extends in the X direction.

Cross member 24 has a hole portion 24f. Hole portion 24f is a through hole penetrating side surface 24a. Specifically, hole portion 24f penetrates side surface 24a in the Y direction. Hole portion 24f is an example of the "hole portion" and "through hole" in the present disclosure.

A seat member 330 includes a sagging portion 331 and an outer peripheral edge 332. Outer peripheral edge 332 surrounds sagging portion 331. Outer peripheral edge 332 is fixed to the surface of side surface 24a (the surface on the power storage cell 210 side) by means of adhesion, bolt fastening, or the like. Outer peripheral edge 332 may be attached to the surface of side surface 24a opposite power storage cell 210. Seat member 330 is an example of the "heat-resistant member" in the present disclosure.

Sagging portion 331 is positioned so as to face pressure relief valve SV. Sagging portion 331 covers hole portion 24f from the Y1 side (the power storage cell 210 side). In other words, sagging portion 331 is positioned so as to overlap hole portion 24f as viewed from the Y1 side. The direction in which the peaks and troughs of sagging portion 331 are disposed side by side (the Z direction in Fig. 15) is not limited to the example shown in Fig. 15.

Thus, sagging portion 331 can be deformed so as to protrude inside hole portion 24f, thus easily reducing the momentum of an emission from power storage cell 210. In addition, hole portion 24f, which is a through hole, can further suppress contact of sagging portion 331 with cross member 24.

A notch 331c may be formed, for example, at the center of sagging portion 331 in the Z direction.

As shown in Fig. 16, a plurality of hole portions 24f are formed in side surface 24a. The plurality of hole portions 24f are disposed side by side in the X direction. The gas (the dashed arrow in Fig. 16) discharged from power storage cell 210 ruptures sagging portion 331 to flow into internal space S3 through hole portion 24f. The gas is then led to exhaust valve 40 (Fig. 12) through internal space S3. Seat member 330 (sagging portion 331) may extend in the X direction so as to cover the plurality of hole portions 24f.

Modification 2 has described an example in which hole portion 24f, which is a through hole, is formed in side surface 24a, but the present disclosure is not limited thereto. Instead of the through-hole, a recess may be formed in side surface 24a.

Modification 2 has also described an example in which hole portion 24f is formed in cross member 24, but the present disclosure is not limited thereto. Hole portions or recesses (groove portions) may be formed in a component other than cross member 24 which is disposed side by side with power storage cell 210 (e.g., peripheral wall 21d of the lower case (Fig. 5)).

### [Embodiment 2]

Next, Embodiment 2 of the present disclosure will be described with reference to Figs. 17 to 24. In Embodiment 2, a power storage device 400 is mounted in a mobility robot.

As shown in Fig. 17, power storage device 400 is mounted in a mobility robot 800. Mobility robot 800 is used for, for example, transporting cargoes and for carrying users. The use of power storage device 400 is not limited to use in mobility robots.

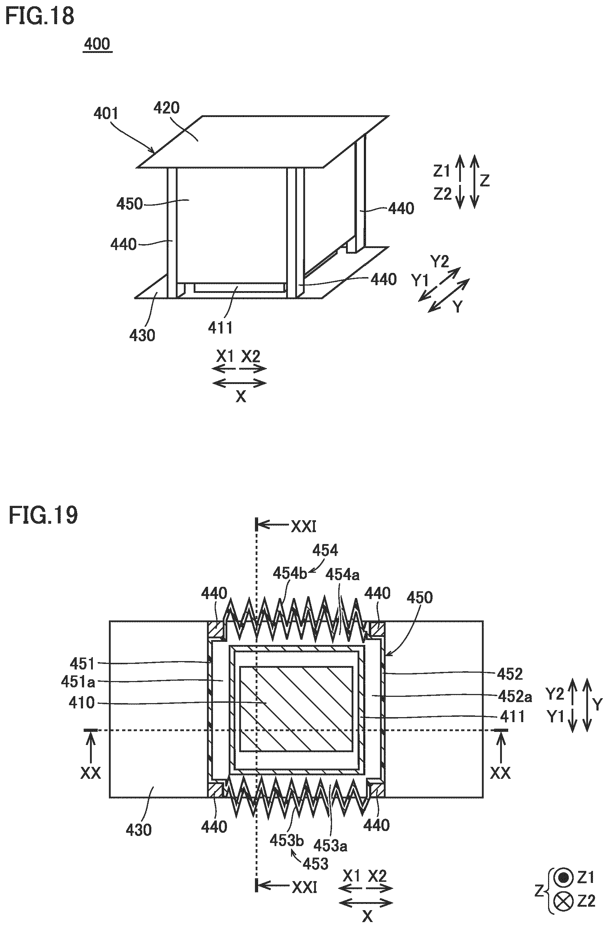

Fig. 18 is a perspective view showing a configuration of power storage device 400. Power storage device 400 includes a disposition member 401 in which a power storage cell 410 (Fig. 19) is disposed. Disposition member 401 includes an accommodation case 411, a top plate 420, a support plate 430, and four pillars 440. Power storage device 400 also includes a seat member 450. Accommodation case 411 and seat member 450 are examples of the "disposition member" and "heat-resistant member", respectively, in the present disclosure.

Top plate 420 covers accommodation case 411 from above (Z1 side). Support plate 430 supports accommodation case 411 from below (Z2 side). Top plate 420 and support plate 430 are arranged in the Z direction. Top plate 420 and support plate 430 are made of metal (e.g., aluminum).

Each of the four pillars 440 extends in the Z direction between top plate 420 and support plate 430. The four pillars 440 are connected (e.g., fastened, welded, or bonded) to each of top plate 420 and support plate 430. Accommodation case 411 is disposed in the region surrounded by the four pillars 440. Pillar 440 is made of, for example, aluminum.

Seat member 450 covers accommodation case 411 from above and from sides. Seat member 450 is fixed (fastened or bonded) to top plate 420 and each pillar 440. Seat member 450 has heat resistance (flame resistance). This can suppress melting of seat member 450 due to high-temperature gas or the like discharged from power storage cell 410. Seat member 450 may have heat insulating properties.

Fig. 19 is a sectional view (a cross-section orthogonal to the Z direction) showing a configuration of power storage device 400. Seat member 450 includes side surface portions 451 to 454. Each of side surface portions 451 to 454 is fixed to pillar 440.

Side surface portion 451 covers accommodation case 411 from the X1 side. A flow channel 451a, through which gas flows, is formed between side surface portion 451 and accommodation case 411.

Side surface portion 452 covers accommodation case 411 from the X2 side. Side surface portion 451 and side surface portion 452 are arranged in the X direction. A flow channel 452a, through which gas flows, is formed between side surface portion 452 and accommodation case 411.

Side surface portion 453 covers accommodation case 411 from the Y1 side. A flow channel 453a, through which gas flows, is formed between side surface portion 453 and accommodation case 411.

Side surface portion 454 covers accommodation case 411 from the Y2 side. Side surface portion 453 and side surface portion 454 are arranged in the Y direction. A flow channel 454a, through which gas flows, is formed between side surface portion 454 and accommodation case 411.

Flow channels 451a, 452a, 453a, 454a are in communication with one another. Each of flow channels 451a, 452a, 453a, 454a is an example of the "exhaust duct" in the present disclosure.

As shown in Fig. 19, side surface portion 453 is provided with a sagging portion 453b. Sagging portion 453b is folded in the bellows shape while being sagged. Specifically, sagging portion 453b is formed by peaks and troughs alternately disposed side by side in the X direction in the sagged state. At least part of flow channel 453a is formed by sagging portion 453b. The direction in which the peaks and troughs of sagging portion 453b are disposed side by side may not be limited to the example shown in Fig. 19.

Side surface portion 454 is provided with a sagging portion 454b. Sagging portion 454b is folded in the bellows shape in the sagged state. Specifically, sagging portion 454b is formed by peaks and troughs alternately disposed side by side in the X direction. At least part of flow channel 454a is formed by sagging portion 454b. The direction in which the peaks and troughs of sagging portion 454b are disposed side by side may not be limited to the example shown in Fig. 19.

Accommodation case 411 accommodates power storage cell 410. Fig. 19 shows an example in which there is one power storage cell 410, but there may be two or more power storage cells 410.

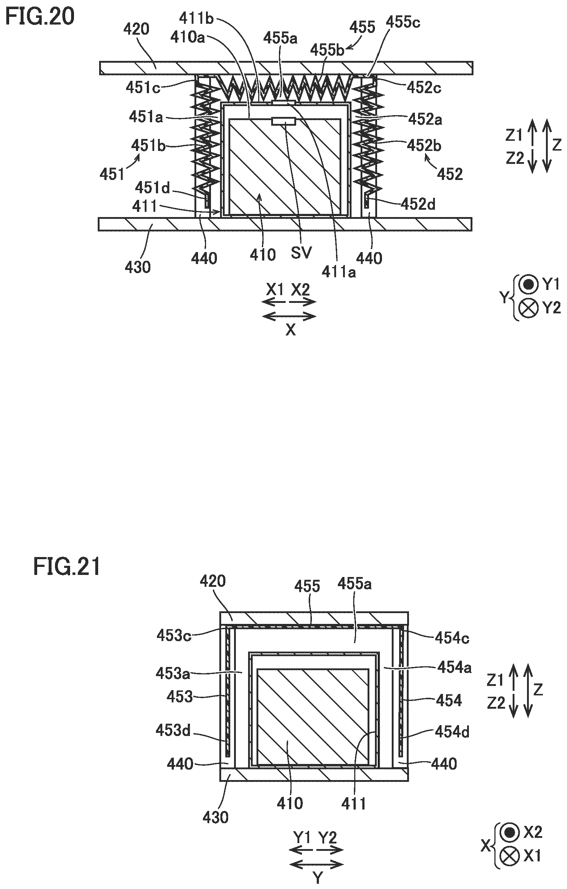

Fig. 20 is a sectional view taken along the line XX-XX in Fig. 19. Seat member 450 includes an upper surface portion 455. Upper surface portion 455 is fixed to top plate 420. For example, an outer peripheral edge 455c of upper surface portion 455 may be fixed to top plate 420.

Upper surface portion 455 covers accommodation case 411 from the Z1 side. A flow channel 455a, through which gas flows, is formed between upper surface portion 455 and accommodation case 411. Flow channel 455a is in communication with each of flow channels 451a, 452a, 453a, 454a. Flow channel 455a is an example of the "exhaust duct" in the present disclosure.

As shown in Fig. 20, upper surface portion 455 is provided with a sagging portion 455b. Sagging portion 455b is provided inside outer peripheral edge 455c. Sagging portion 455b is folded in the bellows shape while being sagged. Sagging portion 455b is formed by peaks and troughs alternately disposed side by side in the X direction. At least part of flow channel 455a is formed by sagging portion 455b. The direction in which the peaks and troughs of sagging portion 455b are disposed side by side may not be limited to the example shown in Fig. 20.

Side surface portion 451 is provided with a sagging portion 451b. Sagging portion 451b is folded in the bellows shape while being sagged. Sagging portion 451b is formed by peaks and troughs alternately disposed side by side in the Z direction. At least part of flow channel 451a is formed by sagging portion 451b. The direction in which the peaks and troughs of sagging portion 451b are disposed side by side may not be limited to this example.

An upper end 451c of side surface portion 451 is fixed to pillar 440 adjacent to side surface portion 451. In addition, a lower portion 451d of side surface portion 451, which is near the lower end, is fixed to pillar 440 adjacent to side surface portion 451. Sagging portion 451b is provided between upper end 451c and lower portion 451d.

Side surface portion 452 is provided with a sagging portion 452b. Sagging portion 452b is folded in the bellows shape while being sagged. Sagging portion 452b is formed by peaks and troughs alternately disposed side by side in the Z direction. At least part of flow channel 452a is formed by sagging portion 452b. The direction in which the peaks and troughs of sagging portion 452b are disposed side by side may not be limited to the example shown in Fig. 20.

An upper end 452c of side surface portion 452 is fixed to pillar 440 adjacent to side surface portion 452. In addition, a lower portion 452d of side surface portion 452, which is near the lower end, is fixed to pillar 440 adjacent to side surface portion 452. Sagging portion 452b is provided between upper end 452c and lower portion 452d.

Power storage cell 410 has pressure relief valve SV. Pressure relief valve SV is provided in an upper surface 410a of power storage cell 410.

Accommodation case 411 has an exhaust valve 411a. Exhaust valve 411a is provided on an upper surface 411b of accommodation case 411.

Fig. 21 is a sectional view taken along the line XXI-XXI in Fig. 19. An upper end 453c of side surface portion 453 is fixed to pillar 440 adjacent to side surface portion 453. In addition, a lower portion 453d of side surface portion 453, which is near the lower end, is fixed to pillar 440 adjacent to side surface portion 453. Sagging portion 453b (Fig. 19) is provided between upper end 453c and lower portion 453d.

An upper end 454c of side surface portion 454 is fixed to pillar 440 adjacent to side surface portion 454. In addition, a lower portion 454d of side surface portion 454, which is near the lower end, is fixed to pillar 440 adjacent to side surface portion 454. Sagging portion 454b (Fig. 19) is provided between upper end 454c and lower portion 454d.

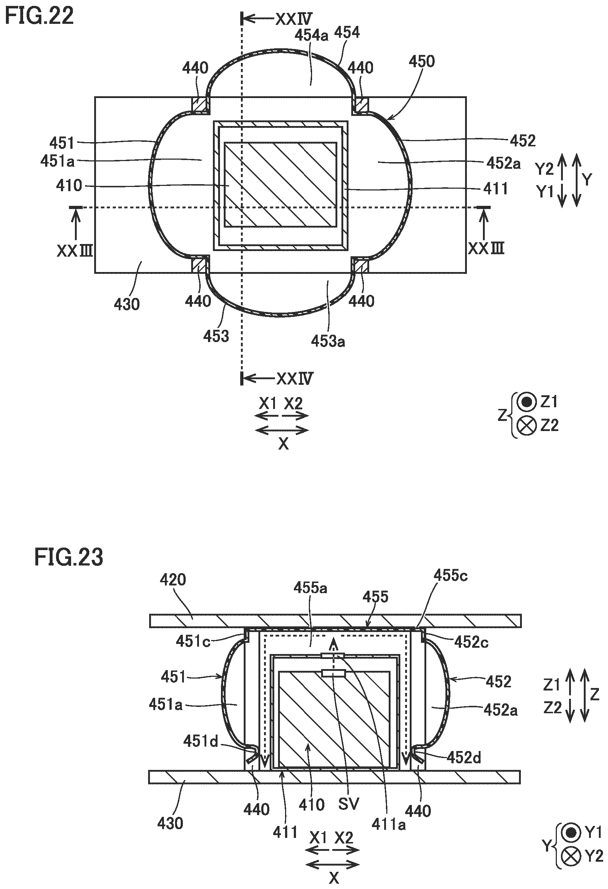

Fig. 22 shows a state in which power storage cell 410 has discharged an emission such as high-temperature gas from the state shown in Fig. 19. As shown in Fig. 22, the respective sagging portions (451b to 454b) (Figs. 19 and 20) of side surface portions 451 to 454 have changed to a shape that protrudes opposite accommodation case 411. This increases the flow channel area of each of flow channels (451a to 454a).

Fig. 23 is a sectional view taken along the line XXIII-XXIII in Fig. 22. As shown in Fig. 23, as a force is applied upward to upper surface portion 455, upper surface portion 455 deforms due to the discharge momentum of an emission, leading to adhesion between upper surface portion 455 and top plate 420.

Thus, the flow channel area of flow channel 455a is increased. In Fig. 23, the flow path of the high-temperature gas discharged from pressure relief valve SV is indicated by the dashed arrows. The high-temperature gas flows through each of flow channels (451a to 455a) and is discharged to the outside from the lower end of seat member 450. After that, although not shown in detail, the high-temperature gas is discharged to below (to the ground side) mobility robot 800 (Fig. 17).

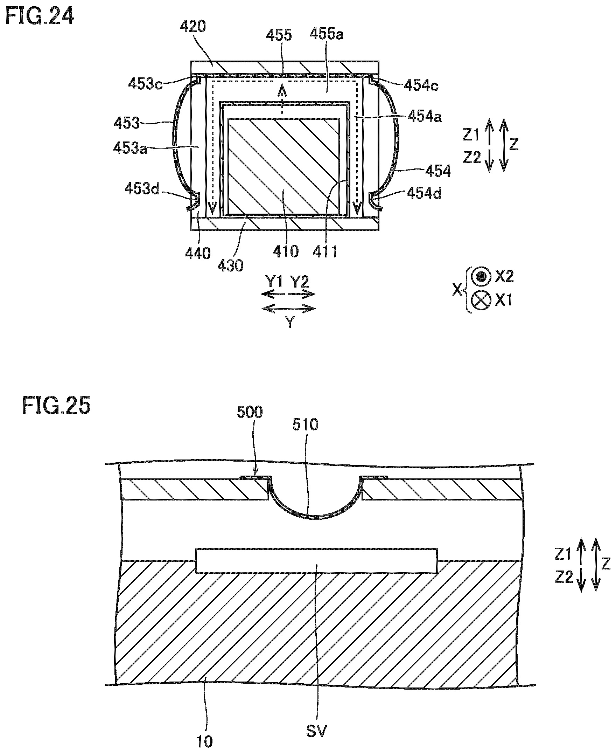

Fig. 24 is a sectional view taken along the line XXIV-XXIV in Fig. 22. In Fig. 24, the flow path of the high-temperature gas discharged from pressure relief valve SV (Fig. 23) is indicated by the dashed arrows.

The size of the bellows (the width and height difference between the peaks and troughs) in the sagging portion (451b to 455b) is set such that, for example, the volume (the total volume of each flow channel) of the flow channel (451a to 455a) in the stretched state (Figs. 22 to 24) is 105% to 150% of the volume of the flow channel in the sagged state (Figs. 19 to 21). In addition, as in Embodiment 1 described above, the length of the sagging portion in the stretched state (the length in the direction in which the peaks and troughs are disposed side by side) may be 105% to 150% of the length in the sagged state.

As described above, in Embodiment 2, seat member 450 having the sagging portions (451b to 455b) covers accommodation case 411 from above and from sides. As a result, as high-temperature gas or the like is discharged from power storage cell 410, the flow channel (451a to 455a) can be expanded by deforming the sagging portion. This can reduce the momentum (flow velocity) of the high-temperature gas or the like. Thus, the high-temperature gas with reduced momentum or the like can be discharged to the outside, and leakage of the high-temperature gas or the like through the gap of seat member 450 can be suppressed.

### [Modifications]

Embodiment 1 has described the example in which sagging portion 31 covers smoke exhaust hole 21e, which is a through hole formed in lower case 21, but the present disclosure is not limited thereto. For example, the sagging portion may cover a recess (groove portion) formed in the lower case.

Embodiment 1 has described the example in which notch 31c, which serves as the rupture starting point, is formed in sagging portion 31, but the present disclosure is not limited thereto. For example, a portion having a thickness smaller than that of any other portion may be formed in part of the sagging portion. Alternatively, part of the sagging portion may be formed of a material that is lower in rigidity than any other portion.

Embodiment 1 has described the example in which sagging portion 131 is positioned so as to face exhaust valve 40, but the present disclosure is not limited thereto. For example, a sagging portion may be positioned so as to face hole portion 21j formed in lower case 21 (Fig. 12). Alternatively, a sagging portion may be provided between hole portion 21j and exhaust valve 40.

Embodiment 2 has described the example in which power storage cell 410 is accommodated in accommodation case 411, but the present disclosure is not limited thereto. Power storage cell 410 may be directly disposed (placed) on support plate 430 without being accommodated in the accommodation case.

Embodiments 1 and 2 have described the example in which the sagging portion is folded in the bellows shape, but the present disclosure is not limited thereto. For example, as shown in Fig. 25, a sagging portion 510 formed in a seat member 500 may hang downward due to its own weight while being sagged. Sagging portion 510 may be folded and accommodated in a predetermined space (e.g., similarly to an airbag). Seat member 500 is an example of the "heat-resistant member" in the present disclosure.

Embodiment 1 has described the example in which seat member 130 covering exhaust valve 40 is provided, but the present disclosure is not limited thereto. Seat member 130 may not be provided. Alternatively, while seat member 130 is provided, seat member 30 may not be provided. In this case, a heat-resistant sheet without a sagging portion may be used in place of seat member 30.

Embodiment 1 has described the example in which length L2 of sagging portion 31 with the sagging eliminated (in the stretched/extended state) is 105% or more and 150% or less of length L1 of sagging portion 31 in the sagged state, but the present disclosure is not limited thereto. For example, the area of sagging portion 31 with the sagging eliminated may be, for example, 105% or more and 150% or less of the area of sagging portion 31 in the sagged state.

The configurations of the embodiments and the various modifications described above may be combined with each other.

Although the embodiments of the present disclosure have been described, it should be understood that the present embodiments disclosed herein are illustrative and non-restrictive in every respect. The scope of the present disclosure is defined by the terms of the claims and is intended to include any modifications within the scope and meaning equivalent to the terms of the claims.

## Claims

1. A power storage device (100, 400) comprising:
a power storage cell (10, 110, 210, 410) provided with a pressure relief valve (SV);
a disposition member (20, 411) in which the power storage cell is disposed; and
a heat-resistant member (30, 130, 230, 330, 450, 500) provided in the disposition member,
wherein the heat-resistant member includes a sagging portion (31, 131, 231, 331, 451b, 452b, 453b, 454b, 455b, 510) disposed while being sagged.

2. The power storage device according to claim 1, wherein the sagging portion is positioned so as to face the pressure relief valve.

3. The power storage device according to claim 2, wherein
the disposition member (20) includes an upper cover (22) disposed above the power storage cell (110),
the upper cover has a lower surface (22a),
the lower surface has a recess (22b) recessed upward, and
the sagging portion (231) covers the recess from below.

4. The power storage cell (100) according to claim 2, wherein
the disposition member includes a lower cover (21a) disposed below the power storage cell (10),
the lower cover has a hole portion (21e), and
the sagging portion (31) covers the hole portion from above.

5. The power storage device according to claim 4, wherein the hole portion has a through hole (21e) penetrating the lower cover.

6. The power storage device according to claim 2, wherein
the disposition member includes a parallel member (24) disposed side by side with the power storage cell (210) in a crossing direction crossing an upward-downward direction,
the parallel member has a hole portion (24f), and
the sagging portion (331) covers the hole portion from one side in the crossing direction.

7. The power storage device according to claim 6, wherein
the parallel member includes
a first side surface (24a) and a second side surface (24b) opposite to each other in the crossing direction, and
a connecting surface (24e) connecting upper portions (24c, 24d) of the first side surface and the second side surface to each other,
the parallel member has a hollow shape in which an internal space (S3) defined by the first side surface, the second side surface, and the connecting surface is formed,
the first side surface is disposed on a power storage cell side relative to the second side surface, and
the hole portion has a through hole (24f) penetrating the first side surface.

8. The power storage device according to any one of claims 1 to 7, wherein the sagging portion has a first part (31b) and a second part (31a) that is ruptured more easily than the first part.

9. The power storage device according to any one of claims 1 to 7, wherein a length (L2) of the sagging portion in a stretched state is 105% or more and 150% or less of a length (L1) of the sagging portion in a sagged state.

10. The power storage device according to any one of claims 1 to 7, wherein
the sagging portion deforms so as to protrude toward the power storage cell when a pressure of a first space (S1) on a power storage cell side relative to the sagging portion is lower than a pressure of a second space (S2) opposite the first space relative to the sagging portion, and
the sagging portion protruding toward the power storage cell is spaced apart from the power storage cell without being in contact with the power storage cell.

11. The power storage device (400) according to claim 1, wherein
the disposition member includes an accommodation case (411) that accommodates the power storage cell,
the accommodation case includes an exhaust valve (411a), and
the sagging portion (455b) is positioned so as to face the exhaust valve.

12. The power storage device according to claim 11, further comprising an exhaust duct (451a, 452a, 453a, 454a, 455a) through which gas discharged from the exhaust valve flows,
wherein at least part of the exhaust duct is formed by the sagging portion.

13. The power storage device according to any one of claims 1 to 7, wherein the sagging portion is folded in a bellows shape while being sagged.
